# EUROPÄISCHE PATENTSCHRIFT

(11) **EP 4 357 605 B1**
(45) Veröffentlichungstag und Bekanntmachung des Hinweises auf die Patenterteilung: **30.04.2025**
(21) Anmeldenummer: 22201961.4
(22) Anmeldetag: 17.10.2022
(51) Int. Cl.: F03D 1/06, F03D 80/40

(54) **WINDENERGIEANLAGEN-ROTORBLATT UND WINDENERGIEANLAGE**
WIND TURBINE ROTOR BLADE AND WIND TURBINE
PALE DE ROTOR D'ÉOLIENNE ET ÉOLIENNE

(43) Veröffentlichungstag der Anmeldung: 24.04.2024
(73) Patentinhaber: Wobben Properties GmbH, 26607 Aurich (DE)
(72) Erfinder: Daboul, Hussam, 26624 Südbrookmerland (DE); Mahmoud, Muhanad, 26605 Aurich (DE); Krebs, Sven, 26789 Leer (DE)
(74) Vertreter: Eisenführ Speiser

(56) Entgegenhaltungen:
- WO-A1-2020/165663
- CN-A- 101 705 921
- CN-A- 113 819 014
- CN-U- 213 574 483
- DE-A1- 102010 051 295
- US-A1- 2015 056 074

## Beschreibung

Die vorliegende Erfindung betrifft ein Windenergieanlagen-Rotorblatt und eine Windenergieanlage.

Da Rotorblätter einer Windenergieanlage ungeschützt allen Witterungsbedingungen ausgesetzt sind, kann es bei bestimmten Temperaturen zu einer Vereisung der Rotorblätter kommen. Um dies zu verhindern, kann eine Rotorblattheizung verwendet werden. Hierbei kann entweder eine Heizung außen am Rotorblatt vorgesehen werden oder erwärmte Luft kann innerhalb des Rotorblattes bereitgestellt werden. Dies kann beispielsweise mittels eines Heizregisters erfolgen, das warme Luft erzeugt, welche dann in das Innere des Rotorblattes geblasen wird.

WO 2017/021350 A1 zeigt ein Windenergieanlagen-Rotorblatt mit einem Rotorblattwurzelbereich und einem Rotorblattspitzenbereich sowie einer Rotorblattheizung. Ferner ist mindestens ein Steg entlang einer Längsachse des Rotorblattes vorgesehen. An dem Steg kann eine Umlenkeinheit in Form eines Stegtropfens vorgesehen sein, um eine Verwirbelung der Luft beim Umlenken zu reduzieren.

WO 2018/211055 zeigt ein Windenergieanlagen-Rotorblatt mit einer Rotorblattheizung. Das Rotorblatt weist einen Steg und eine Umlenkeinheit im Bereich der Rotorblattspitze zum Umlenken von erwärmter Luft auf. Lösungen nach dem Stand der Technik finden Sie auch in den Dokumenten DE 10 2010 051295 A1, US 2015/056074 A1, WO 2020/165663 A1 und CN 101705921 A.

Es ist eine Aufgabe der vorliegenden Erfindung, ein Windenergieanlagen-Rotorblatt vorzusehen, welches eine verbesserte Beheizung des Rotorblattes ermöglicht.

Diese Aufgabe wird durch ein Windenergieanlagen-Rotorblatt nach Anspruch 1 und durch eine Windenergieanlage nach Anspruch 6 gelöst.

Somit wird ein Windenergieanlagen-Rotorblatt mit einer Rotorblattwurzel, einer Rotorblattspitze, einer Druckseite und einer Saugseite, einer Vorderkante und einer Hinterkante vorgesehen. Das Rotorblatt weist eine Längsrichtung auf. Mittels einer Rotorblattheizung wird warme Luft erzeugt, welche dann in das Innere des Rotorblattes geblasen wird. Im Inneren des Rotorblattes ist eine Luftführung vorgesehen. Die Luftführung kann mindestens zwei Luftführungsabschnitte z.B. in Form von Luftkanälen aufweisen, die zumindest teilweise voneinander getrennt ausgestaltet sind. Es wird mindestens ein Wärmeüberträger mit einem ersten und einem zweiten Ende vorgesehen. Das erste Ende des Wärmeüberträgers reicht in einen ersten Luftführungsabschnitt hinein, während das zweite Ende des Wärmeüberträgers in einen zweien Luftführungsabschnitt hineinragt. Mittels des Wärmeüberträgers wird Wärme aus einem der Luftführungsabschnitte in den anderen Luftführungsabschnitt übertragen.

Der Wärmeüberträger kann einen passiven Wärmeüberträger darstellen, der ohne Energiezufuhr von außen dazu in der Lage ist, die Wärme zu übertragen.

Der Wärmeüberträger kann als Wärmerohr (Heatpipe), als Zwei-Phasen Thermosiphon oder als Wärmebrücke ausgestaltet sein.

Mindestens ein Steg oder ein anderes Anbauteil des Rotorblattes kann zwischen der Druckseite und der Saugseite entlang der Längsrichtung des Rotorblattes vorgesehen. Die von der Rotorblattheizung erwärmte Luft kann entlang des Steges durch einen Luftführungsabschnitt in Richtung der Rotorblattspitze geblasen werden, wo sie umgelenkt wird, so dass die erwärmte Luft auf der anderen Seite des Steges durch einen weiteren Luftführungsabschnitt zurück von dem Rotorblattspitzenbereich zu dem Rotorblattwurzelbereich strömen kann. Mindestens ein Wärmeüberträger kann in oder an dem Steg oder dem Anbauteil derart angeordnet sein, dass ein erstes Ende des Wärmeüberträgers in einen Luftführungsabschnitt und ein zweites Ende des Wärmeüberträgers in einen Luftführungsabschnitt auf der anderen Seite des Steges hineinragt. Damit kann Wärme von dem wärmeren Ende zu dem kälteren Ende des Wärmeüberträgers übertragen werden.

Warme Luft in einem der Luftführungsabschnitte strömt an dem ersten oder zweiten Ende des Wärmeüberträgers vorbei und erwärmt das erste oder zweite Ende. Die Wärme in dem ersten oder zweiten Ende wird über den Wärmeüberträger (der als passiver Wärmeüberträger ausgestaltet ist) an das zweite oder erste Ende übertragen. Die an dem zweiten oder ersten Ende des Wärmeüberträgers vorbeiströmende Luft in dem weiteren Luftführungsabschnitt nimmt dann die Wärme in dem zweiten oder ersten Ende auf. Dadurch wird das zweite oder erste Ende abgekühlt. Da wieder Wärme von dem ersten oder zweiten Ende des Wärmeüberträgers nachkommt, wird das zweite oder erste Ende wieder erwärmt und kann diese Wärme wieder an die vorbeiströmende Luft abgeben.

Der Wärmeüberträger kann mit einem Steg zwischen einem ersten und einem zweiten Luftführungsabschnitt vorgesehen sein an seiner einen Seite an die Rotorblattinnenwandung oder an einen Steg gekoppelt sein, so dass es zu einer Wärmeübertragung quer zum Steg kommt.

Zur Verbesserung einer Temperaturverteilung auf der Außenseite eines Rotorblattes insbesondere bei niedrigen Außentemperaturen oder bei einem Eisansatz wird ein Rotorblattheizsystem vorgesehen, welches ein Luftheizsystem darstellen kann. Im Inneren des Rotorblattes können (mehrere) Luftführungsabschnitte wie beispielsweise Luftkanäle vorgesehen sein. Warme Luft von der Rotorblattheizung wird in einen der Luftführungsabschnitte eingeblasen. Die Luft kann dabei eine Temperatur von ≥ 70° C aufweisen. Die erwärmte Luft wird entlang des ersten Luftführungsabschnittes von der Rotorblattwurzel zur Rotorblattspitze geführt. Anschließend kann die zumindest bereits teilweise abgekühlte Luft wieder zurück über einen zweiten Luftführungsabschnitt in Richtung der Rotorblattwurzel gelenkt werden. Zur Verbesserung der Wärmeverteilung insbesondere an der Wandung des Rotorblattes wird mindestens ein Wärmeüberträger vorgesehen, welcher eine Wärmeübertragung von einem Luftführungsabschnitt an einen anderen Luftführungsabschnitt erlaubt. Dies erfolgt vorzugsweise ohne eine Massenübertragung. Die Wärmeübertragung kann durch Wärmebrücken erfolgen.

Das Rotorblatt kann mindestens einen Bypass in dem Steg aufweisen, um eine Luftströmung von einem Luftführungsabschnitt durch den Steg zu einem anderen Luftführungsabschnitt zu ermöglichen.

Der Wärmeüberträger als passiver Wärmeübertrager kann als eine Heatpipe (Wärmerohr) oder als eine Wärmebrücke beispielsweise in Form von wärmehochleitenden Materialien ausgestaltet sein. Derartige Materialien können beispielsweise Kupfer oder Aluminium darstellen. Die Wärmeüberträger weisen ein erstes und zweites Ende auf, wobei ein Ende in den ersten Luftführungsabschnitt und das zweite Ende in den zweiten Luftführungsabschnitt hineinreicht.

Der Vorteil der Wärmeüberträger besteht darin, dass sie eine lediglich geringe Querschnittsfläche aufweisen und dass ein Vorsehen eines derartigen Wärmeüberträgers in einem Steg eines Rotorblattes lediglich zu einer geringen Reduzierung der mechanischen Stabilität des Stegs führt. Im Gegensatz dazu kann es bei Bypässen dazu kommen, dass die mechanische Stabilität des Stegs beeinträchtigt wird, da mehrere Löcher im Steg vorhanden sein müssen, um einen Bypass realisieren zu können.

Somit wird ein Wärmeüberträger mit einer geringen Querschnittsfläche vorgesehen.

Durch das Vorsehen der Wärmeüberträger im Inneren des Rotorblattes kann die Effizienz der Rotorblattheizung erheblich verbessert werden. Insbesondere kann eine lokale Beeinflussung der Wärmeverteilung verbessert werden.

Gemäß einem Aspekt der vorliegenden Erfindung kann neben den Wärmeüberträgern auch mindestens ein Bypass in oder an dem Steg vorgesehen sein.

Optional kann der Wärmeüberträger eine Oberflächenvergrößerung (beispielsweise in Form einer Rippenstruktur) aufweisen. Die Oberflächenvergrößerung kann an dem ersten und/oder zweiten Ende vorgesehen sein. Mit der Oberflächenvergrößerung kann die Wärmeübertragung verbessert werden.

Der Wärmeüberträger kann als passive Wärmetransporteinheit zum Wärmetransport von einem Ende zum anderen Ende ausgestaltet sein.

Weitere Ausgestaltungen der Erfindung sind Gegenstand der Unteransprüche.

Vorteile und Ausführungsbeispiele der Erfindung werden nachstehend unter Bezugnahme auf die Zeichnung näher erläutert.
- Fig. 1: zeigt eine schematische Darstellung einer Windenergieanlage gemäß der Erfindung,
- Fig. 2: zeigt eine schematische abschnittsweise Darstellung des Rotorblattes der Windenergieanlage von Fig. 1 gemäß einem ersten Ausführungsbeispiel, und
- Fig. 3: zeigt eine schematische Schnittansicht eines Rotorblattes einer Windenergieanlage von Fig. 1 gemäß einem zweiten Ausführungsbeispiel.

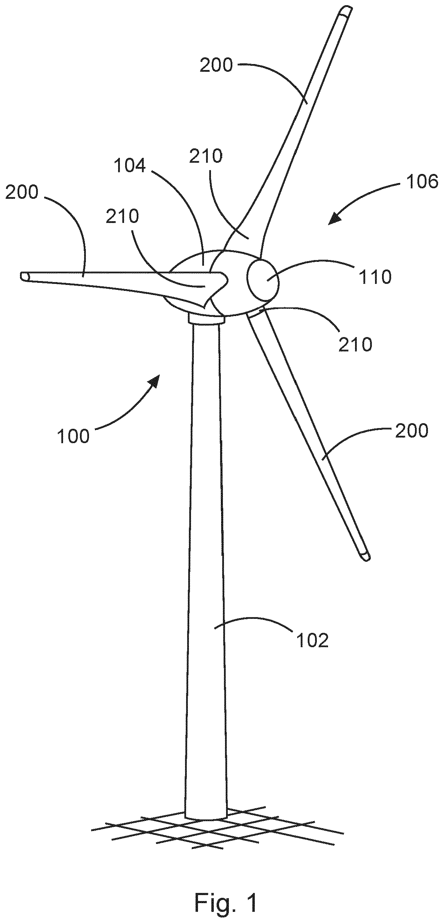

Fig. 1 zeigt eine schematische Darstellung einer Windenergieanlage gemäß der Erfindung. Die Windenergieanlage 100 weist einen Turm 102 und eine Gondel 104 auf dem Turm 102 auf. An der Gondel 104 ist ein aerodynamischer Rotor 106 mit drei Rotorblättern 200 und einem Spinner 110 vorgesehen. Der aerodynamische Rotor 106 wird im Betrieb der Windenergieanlage durch den Wind in eine Drehbewegung versetzt und dreht somit auch einen Rotor oder Läufer eines Generators, welcher direkt oder indirekt mit dem aerodynamischen Rotor 106 gekoppelt ist. Der elektrische Generator ist in der Gondel angeordnet und erzeugt elektrische Energie. Die Pitchwinkel der Rotorblätter 200 können durch Pitchmotoren an den Rotorblattwurzeln 210 der jeweiligen Rotorblätter 200 verändert werden.

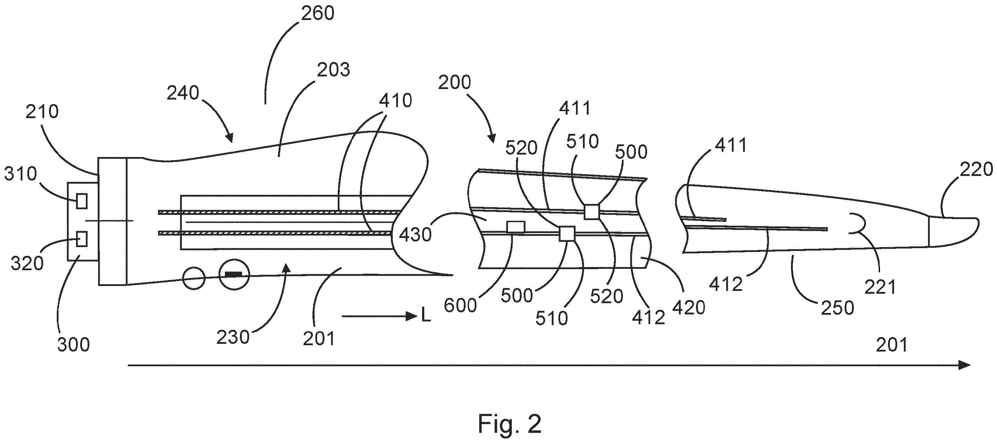

Fig. 2 zeigt eine schematische abschnittsweise Darstellung des Rotorblattes der Windenergieanlage von Fig. 1 gemäß einem ersten Ausführungsbeispiel. Das Rotorblatt 200 weist eine Länge 201, eine Rotorblattwurzel 210, eine Rotorblattspitze 220, eine Vorderkante 230, eine Hinterkante 240, eine Druckseite 250 und eine Saugseite 260 auf. Innerhalb des Rotorblattes 200 ist eine Luftführung 400 vorgesehen, welche beispielsweise als ein erster, zweiter und/oder dritter Luftführungsabschnitt 420, 430, 440 ausgestaltet sein kann. Die Luftführungsabschnitte 420, 430, 440 können durch Elemente des Rotorblattes (z. B. Stege 410) voneinander zumindest teilweise entlang der Länge 201 des Rotorblattes 200 getrennt sein. Eine Rotorblattheizung 300 kann im Bereich der Rotorblattwurzel 210 vorgesehen sein. Die Rotorblattheizung 300 kann einen Lüfter 320 und eine Heizung 310 aufweisen und warme Luft erzeugen, die in das Innere 203 des Rotorblattes 200 geleitet werden kann.

Die Rotorblattheizung 300 kann in das Rotorblatt integriert sein oder außerhalb des Rotorblattes vorgesehen sein.

Entlang einer Längsrichtung L des Rotorblattes 200 erstreckt sich innerhalb des Rotorblattes mindestens ein Steg 410, 411, 412, der Teil der Luftführung 400 ist bzw. der aus anderen Gründen bereits vorhanden ist und die Luftführung 400 lediglich eine sekundäre Funktion darstellt. Optional kann mehr als ein Steg vorgesehen sein. Die Stege 411, 412 können die ersten, zweiten und/oder dritten Luftführungsabschnitte 420, 430, 440 voneinander zumindest teilweise trennen.

Die durch die Rotorblattheizung 300 erwärmte Luft kann in dem dritten Luftführungsabschnitt 440 entlang des Steges 411 - als Teil der Luftführung 400 - in Richtung der Rotorblattspitze 220 geführt und dann im Bereich der Rotorblattspitze 220 umgelenkt werden. Die erwärmte Luft kann dann entlang des ersten oder zweiten Luftführungsabschnitts 420, 430 zur Rotorblattwurzel geführt werden. Dazu kann ein Umlenkabschnitt 221 im Bereich der Rotorblattspitze 220 vorhanden sein. Optional kann die Rotorblattspitze 220 zumindest teilweise hohl ausgestaltet sein, so dass ein Teil der erwärmten Luft durch die Rotorblattspitze 220 strömen kann, um auch die Rotorblattspitze 220 zu enteisen.

Die erwärmte Luft kann mittels der Rotorblattheizung 300 entweder im Rotorblattwurzelbereich erzeugt werden, indem die Luft mittels einer Heizung 210 erwärmt wird, oder die erwärmte Luft wird dem Rotorblatt 200 im Bereich der Rotorblattwurzel 210 zugeführt.

Mindestens ein Wärmeüberträger 500 kann entlang der Länge L des Rotorblattes 200 in der Luftführung 400 vorgesehen sein. Der Wärmeüberträger 500 weist ein erste und zweites Ende 510, 520 auf. Das erste und zweite Ende 510, 520 des Wärmeüberträger 500 sind in unterschiedlichen Luftführungsabschnitten 420, 430, 440 vorgesehen und können damit Wärme aus einem Luftführungsabschnitt in einen anderen Luftführungsabschnitt übertragen. Dies ist vorteilhaft da es damit zu einer verbesserten Vermischung der Luftströmung kommen kann.

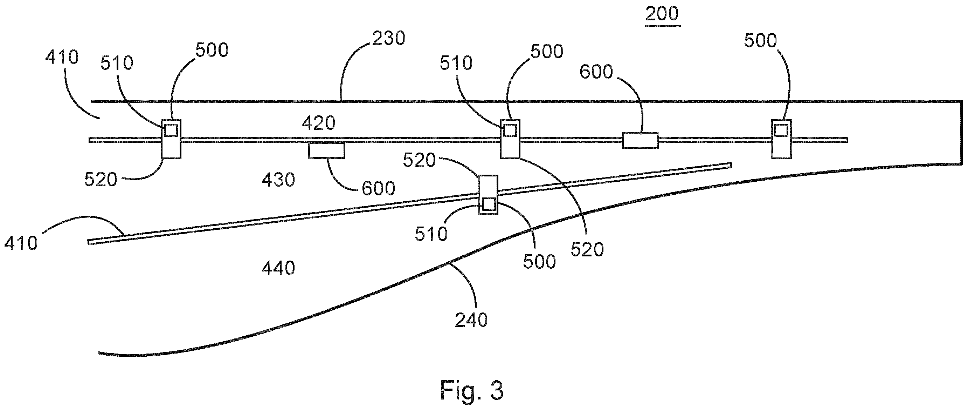

Fig. 3 zeigt eine schematische Darstellung eines Rotorblattes gemäß einem zweiten Ausführungsbeispiel. Das Rotorblatt 200 weist eine Rotorblattwurzel 210, eine Rotorblattspitze 220, eine Vorderkante 230 und eine Hinterkante 240 auf. Im Inneren des Rotorblattes ist mindestens ein Steg 410 vorgesehen, welcher sich von dem Bereich der Rotorblattwurzel 210 in den Bereich der Rotorblattspitze 220 erstreckt. Das Rotorblatt 200 weist mindestens einen Wärmeüberträger 500 mit einem ersten und zweiten Ende 510, 520 auf.

Der Wärmeüberträger 500 kann als eine Heatpipe (Wärmerohr) oder als ein Stab aus einem wärmehochleitenden Material (beispielsweise Kupfer oder Aluminium) ausgestaltet sein. Der Wärmeüberträger 500 zeichnet sich dadurch aus, dass er eine geringe Querschnittsfläche aufweist und keine Öffnung in dem Steg benötigt. Der Wärmeüberträger 500 kann bei der Herstellung des Stegs 410 bereits integriert werden. Alternativ dazu kann eine Bohrung oder Öffnung in dem Steg 410 vorgesehen sein und der Wärmeüberträger 500 kann nach Herstellung des Stegs und beispielsweise nach Herstellung des Rotorblattes mit dem Steg nachträglich eingefügt werden.

Der Wärmeüberträger 500 weist ein erstes und zweites Ende 510, 520 auf. Ein erstes Ende 510 erstreckt sich in einen ersten Luftführungsabschnitt und ein zweites Ende 520 erstreckt sich in einen durch einen Steg 410 oder ein anderes Anbauteil von dem Luftführungsabschnitt mit dem ersten Ende getrennten weiteren Luftführungsabschnitt. Der Wärmeüberträger 500 dient dazu, Wärme von seinem einen Ende zu seinem anderen Ende zu übertragen. Hierbei strömt durch die Rotorblattheizung 300 erwärmte warme Luft an dem ersten oder zweiten Ende 510, 520 des Wärmeüberträgers 500 vorbei und erwärmt den Wärmeüberträger 500. Die Wärme breitet sich dann zu dem anderen (zweiten oder ersten) Ende 520, 510 aus und erwärmt das zweite oder erste Ende 520, 510 entsprechend. Luft, welche an dem zweiten (oder ersten) Ende 520, 510 vorbeistreicht, kann Wärme von dem zweiten Ende 520 aufnehmen. Das zweite Ende 520 des Wärmeüberträgers 500 führt somit zu einer Erwärmung der Luft, welche durch den weiteren Luftführungsabschnitt streicht.

Von der Rotorblattheizung 300 erwärmte Luft strömt entlang eines ersten Luftführungsabschnittes von der Rotorblattwurzel zur Rotorblattspitze, wird dort umgelenkt und strömt dann in einen anderen (zweiten) Luftführungsabschnitt zurück in Richtung des Rotorblattes. In dem ersten Luftführungsabschnitt erwärmt die Luft die Außenwandung des Rotorblattes zumindest in denjenigen Bereichen, wo die Luft an einer Außenwandung des Rotorblattes vorbeiströmt. Dies führt zu einer Abkühlung der erwärmten Luft. Mit anderen Worten, Luft, welche im Bereich der Rotorblattspitze ankommt, wird somit kälter sein als die direkt durch die Rotorblattheizung erwärmte Luft. Die Luft, welche von der Rotorblattspitze entlang des ersten Luftführungsabschnittes zur Rotorblattspitze strömt, nimmt kontinuierlich in ihrer Temperatur ab und erwärmt somit die Wandung des Rotorblattes. Die Luft, welche dann von der Rotorblattspitze durch einen weiteren Luftführungsabschnitt in Richtung der Rotorblattwurzel führt, weist eine niedrige Temperatur auf. Zur Steigerung der Temperatur in dem weiteren Luftführungsabschnitt kann der Wärmeüberträger in oder an dem Steg so vorgesehen sein, dass sein erstes Ende in einen ersten Luftführungsabschnitt und sein zweites Ende in den zweiten Luftführungsabschnitt hineinragt. Die durch die Rotorblattheizung erwärmte Luft strömt an dem ersten Ende vorbei und erwärmt das erste Ende. Die Wärme in dem ersten Ende breitet sich dann in Richtung des zweiten Endes aus. Somit kann die Luft, welche entlang des weiteren Luftströmungsabschnitts zurückströmt, durch den Wärmeüberträger weiter zumindest lokal erwärmt werden. Somit kann eine gleichmäßigere Temperaturverteilung zwischen den Luftführungsabschnitten erreicht werden.

Ein Wärmeüberträger kann gezielt an bestimmten Positionen eingesetzt werden, um eine lokale Temperaturerhöhung in einem Bereich zu reduzieren. Ferner kann ein Wärmeüberträger vorgesehen sein, um eine lokale Temperaturabsenkung auszugleichen.

Der Wärmeüberträger kann als Heatpipe bzw. Wärmerohr, als 2-Phasen-Thermosyphon oder als Wärmebrücke ausgestaltet sein. Eine Wärmebrücke kann beispielsweise einen Stab aus einem hochwärmeleitenden Material (beispielsweis Kupfer oder Aluminium) darstellen. Des Weiteren sind andere nicht-metallische hochwärmeleitende Materialien möglich. Dies ist vorteilhaft, da aufgrund der Blitzschutzproblematik es sinnvoll ist, möglichst auf Metall in dem Rotorblatt zu verzichten.

Zusätzlich zu den Wärmeüberträgern 500 kann zumindest ein Bypass 600 in oder an einem der Stege vorgesehen sein.

Die erfindungsgemäße Lösung lässt sich insbesondere bei Rotorblättern einer Windenergieanlage anwenden, welche eine große Länge aufweisen und einen geringeren Innenquerschnitt aufweisen.

### Bezugszeichenliste

- 100: Windenergieanlage
- 102: Turm
- 104: Gondel
- 106: Rotor
- 110: Spinner
- 200: Rotorblätter
- 201: Länge
- 202: Wandung
- 203: Innere des Rotorblattes
- 210: Rotorblattwurzel
- 220: Rotorblattspitze
- 221: Umlenkabschnitt
- 230: Vorderkante
- 240: Hinterkante
- 250: Druckseite
- 260: Saugseite
- 300: Rotorblattheizung
- 310: Heizung
- 320: Lüfter
- 400: Luftführung
- 410: Steg
- 411: Steg
- 412: Steg
- 420: erster Luftführungsabschnitt
- 430: zweiter Luftführungsabschnitt
- 440: dritter Luftführungsabschnitt
- 500: Wärmeüberträger
- 510: erstes Ende
- 520: zweites Ende
- 600: Bypass
- L: Längsrichtung

## Patentansprüche

1. Windenergieanlagen-Rotorblatt (200), mit
einer Länge (201)
einer Rotorblattwurzel (210),
einer Rotorblattspitze (220),
einer Druckseite (250),
einer Saugseite (260),
einer Luftführung (400) für erwärmte Luft zum Führen von erwärmter Luft innerhalb des Rotorblattes (200) und zumindest teilweise entlang einer Längsrichtung (L) des Rotorblattes (200) von der Rotorblattwurzel (210) in Richtung der Rotorblattspitze (220), und
wobei die Luftführung (400) mindestens einen ersten und einen zweiten voneinander getrennten Luftführungsabschnitt (420, 430, 440) aufweist,
mindestens einem Wärmeübertrager (500) mit einem ersten und zweiten Ende (510, 520),
wobei das erste Ende (510) des Wärmeüberträgers (500) in den ersten Luftführungsabschnitt (420, 430, 440) hineinragt und das zweite Ende (520) in den zweiten Luftführungsabschnitt (420, 430, 440) hineinragt, um Wärme von einem der Luftführungsabschnitte (420, 430, 440) auf einen anderen Luftführungsabschnitt (420, 430, 440) zu übertragen,
wobei der Wärmeüberträger (500) als ein passiver Wärmeüberträger ausgestaltet ist, der ohne Energiezufuhr von außen dazu in der Lage ist, Wärme von einem Ende (510) zum anderen Ende (520) zu übertragen,
wobei der Wärmeüberträger (500) als ein Wärmerohr oder als ein Zweiphasen-Thermosiphon ausgestaltet ist.

2. Windenergieanlagen-Rotorblatt (200) nach Anspruch 1, wobei
die Luftführung (400) mindestens einen Steg (410) aufweist, welcher zumindest teilweise zwischen der Druckseite (250) und der Saugseite (260) angeordnet ist und sich zumindest teilweise entlang der Längsrichtung (L) des Rotorblattes (200) erstreckt und mindestens zwei Luftführungsabschnitte (420, 430, 440) voneinander trennt,
wobei mindestens ein Wärmeüberträger (500) in oder an dem mindestens einen Steg (410) angeordnet ist, insbesondere im Wesentlichen senkrecht.

3. Windenergieanlagen-Rotorblatt (200) nach einem der Ansprüche 1 bis 2, ferner mit
mindestens einem Bypass (600) in einem Steg (410, 411) zum Koppeln des ersten mit dem zweiten Luftführungsabschnitt (420, 430, 440),
wobei der mindestens eine Bypass (600) eine Luftströmung von einem Luftführungsabschnitt durch den Bypass (600) in dem Steg (410, 411) zu einem anderen Luftführungsabschnitt (420, 430, 440) ermöglicht.

4. Windenergieanlagen-Rotorblatt (200) nach einem der Ansprüche 1 bis 3, wobei
der Wärmeüberträger (500) aus einem hochwärmeleitenden Material, insbesondere Metall, hergestellt ist.

5. Windenergieanlagen-Rotorblatt (200) nach einem der Ansprüche 1 bis 4, ferner mit
einer Rotorblattheizung (300) im Bereich der Rotorblattwurzel (210), die dazu ausgestaltet ist, erwärmte Luft in ein Inneres (203) des Rotorblattes (200) zu leiten.

6. Windenergieanlage, mit
mindestens einem Windenergieanlagen-Rotorblatt (200) nach einem der Ansprüche 1 bis 5.

## Claims

1. A wind turbine rotor blade (200), with
a length (201),
a rotor blade root (210),
a rotor blade tip (220),
a pressure side (250),
a suction side (260),
an air guide (400) for heated air to guide heated air inside of the rotor blade (200) and at least partially along a longitudinal direction (L) of the rotor blade (200) from the rotor blade root (210) in the direction of the rotor blade tip (220), and
wherein the air guide (400) has at least one first and a second air guide section (420, 430, 440) separated from each other,
at least one heat exchanger (500) with a first and second end (510, 520),
wherein the first end (510) of the heat exchanger (500) protrudes into the first air guide section (420, 430, 440), and the second end (520) protrudes into the second air guide section (420, 430,4 40), so as to convey heat from one of the air guide sections (420, 430, 440) to another air guide section (420, 430, 440),
wherein the heat exchanger (500) is configured as a passive heat exchanger, which is capable of conveying heat from one end (510) to the other end (520) without any energy being supplied from outside,
wherein the heat exchanger (500) is configured as a heat pipe or as a two-phase thermosyphon.

2. The wind turbine rotor blade (200) according to claim 1, wherein
the air guide (400) has at least one web (410), which is arranged at least partially between the pressure side (250) and the suction side (260), and extends at least partially along the longitudinal direction (L) of the rotor blade (200) and separates at least two air guide sections (420, 430, 440) from each other,
wherein at least one heat exchanger (500) is arranged in or on the at least one web (410), in particular essentially perpendicularly.

3. The wind turbine rotor blade (200) according to one of claims 1 to 2, further with
at least one bypass (600) in a web (410, 411) for coupling the first with the second air guide section (420, 430, 440),
wherein the at least one bypass (600) allows air to flow from one air guide section through the bypass (600) in the web (410, 411) to another air guide section (420, 430, 440).

4. The wind turbine rotor blade (200) according claim 3, wherein
the heat exchanger (500) is made out of a thermally conductive material, in particular metal.

5. The wind turbine rotor blade (200) according to one of claims 1 to 4, further with
a rotor blade heater (300) in the area of the rotor blade root (210), which is configured to guide heated air into an interior (203) of the rotor blade (200).

6. A wind turbine, with
at least one wind turbine rotor blade (200) according to one of claims 1 to 5.

## Revendications

1. Pale de rotor d'éolienne (200), avec
une longueur (201)
un pied de pale de rotor (210),
un bout de pale de rotor (220),
un côté pression (250),
un côté aspiration (260),
un guidage d'air (400) pour de l'air chauffé pour guider de l'air chauffé à l'intérieur de la pale de rotor (200) et au moins partiellement le long d'une direction longitudinale (L) de la pale de rotor (200) à partir du pied de pale de rotor (210) en direction du bout de pale de rotor (220), et
dans laquelle le guidage d'air (400) présente au moins une première et une deuxième section de guidage d'air (420, 430, 440) séparées l'une de l'autre,
au moins un échangeur de chaleur (500) avec une première et deuxième extrémité (510, 520),
dans laquelle la première extrémité (510) de l'échangeur de chaleur (500) avance dans la première section de guidage d'air (420, 430, 440) et la deuxième extrémité (520) avance dans la deuxième section de guidage d'air (420, 430, 440) pour transférer la chaleur à partir d'une des sections de guidage d'air (420, 430, 440) sur une autre section de guidage d'air (420, 430, 440),
dans laquelle l'échangeur de chaleur (500) est conçu comme un échangeur de chaleur passif, qui est apte à transférer de la chaleur d'une extrémité (510) vers l'autre extrémité (520) sans alimentation en énergie de l'extérieur,
dans laquelle l'échangeur de chaleur (500) est conçu en tant que caloduc ou en tant que thermosiphon biphasique.

2. Pale de rotor d'éolienne (200) selon la revendication 1, dans laquelle
le guidage d'air (400) présente au moins une entretoise (410), laquelle est disposée au moins partiellement entre le côté pression (250) et le côté aspiration (260) et s'étend au moins partiellement le long de la direction longitudinale (L) de la pale de rotor (200) et sépare au moins deux sections de guidage d'air (420, 430, 440) l'une de l'autre,
dans laquelle au moins un échangeur de chaleur (500) est disposé dans ou sur l'au moins une entretoise (410), en particulier sensiblement perpendiculairement.

3. Pale de rotor d'éolienne (200) selon l'une quelconque des revendications 1 à 2, en outre avec
au moins une dérivation (600) dans une entretoise (410, 411) pour accoupler la première avec la deuxième section de guidage d'air (420, 430, 440),
dans laquelle l'au moins une dérivation (600) permet un écoulement d'air à partir d'une section de guidage d'air à travers la dérivation (600) dans l'entretoise (410, 411) vers une autre section de guidage d'air (420, 430, 440).

4. Pale de rotor d'éolienne (200) selon l'une quelconque des revendications 1 à 3, dans laquelle
l'échangeur de chaleur (500) est fabriqué à partir d'un matériau hautement thermoconducteur, notamment un métal.

5. Pale de rotor d'éolienne (200) selon l'une quelconque des revendications 1 à 4, en outre avec
un chauffage de pale de rotor (300) dans la zone du pied de pale de rotor (210), qui est conçu pour acheminer de l'air chauffé dans un intérieur (203) de la pale de rotor (200).

6. Éolienne, avec
au moins une pale de rotor d'éolienne (200) selon l'une quelconque des revendications 1 à 5.
